# FASCICULE DE BREVET EUROPEEN

(11) **EP 0 686 947 B1**
(45) Date de publication et mention de la délivrance du brevet: **24.09.1997**
(21) Numéro de dépôt: 95401269.6
(22) Date de dépôt: 31.05.1995
(51) Int. Cl.: G07F 7/08

(54) **Procédé de conduite d'une transaction entre une carte à puce et un système d'information**
Verfahren zum Druckführen einer Transaktion zwischen einer Chipkarte und einem Datensystem
Method for executing a transaction between an IC-card and an information system

(30) Priorité: 03.06.1994 FR 9406858
(43) Date de publication de la demande: 13.12.1995
(73) Titulaire: GEMPLUS, 13420 Gemenos (FR)
(72) Inventeur: Paradinas, Pierre, F-75116 Paris (FR); Vandewalle, Jean-Jacques, F-75116 Paris (FR)
(74) Mandataire: Schmit, Christian Norbert Marie

(56) Documents cités:
- EP-A- 0 172 670
- WO-A-89/02140
- WO-A-93/08545

## Description

La présente invention a pour objet un procédé de conduite d'une transaction entre une carte à puce et un système d'information, notamment une base de données. Elle est notamment destinée à être utilisée avec des cartes à puces du type porte-monnaie électronique. Avec de telles cartes, il est prévu que des unités représentatives de sommes d'argent soient transférées d'une carte à puce à une autre, ou d'une carte à puce à un compte mémorisé dans une base de données, ou l'inverse. Dans le premier cas, en pratique, la deuxième carte à puce joue un rôle de système d'information, par exemple de base de données pour mémoriser des nombres d'unités. Au lieu de transférer des unités représentatives d'échange de monnaies, on peut aussi prévoir que des informations seront échangées: une réservation étant par exemple enregistrée dans une carte à puce alors que l'indisponibilité correspondante du service réservé est notée dans la base de données. Le procédé peut aussi être utilisé avec des cartes à puces de type santé ou même des cartes à puce de type PCMCIA connues par ailleurs pour servir de mémoire.

De tels procédés de conduites de transactions sont par exemple décrits dans le document WO-A-9 308 545 et dans le document EP-A-0 172 670.

Ce type de transaction présente néanmoins des problèmes évidents. Ces problèmes sont liés au fait que le crédit d'unités, ou la réservation, et d'une manière plus générale les informations, peuvent être portés dans un support, par exemple une carte à puce, avant d'être débité dans l'autre, par exemple la base de données, ou une autre carte à puce. Il importe donc d'assurer la cohérence de la transaction et de faire en sorte que l'on ne puisse pas se retrouver dans une situation permettant les incohérences.

Dans une première tentative de solution on a imaginé de rendre les cartes à puces destinataires de la transaction prisonnières d'un mécanisme qui empêche leur retrait physique de l'organe de gestion de la transaction avant que la transaction ne soit terminée. Ce type de mécanisme n'est cependant pas utilisable d'une manière générale, notamment si, pour des besoins de commodité et de diffusion de l'utilisation des cartes à puces, on prévoit de mettre en service des lecteurs aptes à faire le transfert d'une carte à une autre et disponibles par ailleurs en libre service en de nombreux endroits. Le fait de pouvoir retirer la carte à tous moments, ou bien les deux cartes partenaires à la transaction, implique qu'on choisisse une autre solution. En outre il convient, au delà de tout contexte de fraude, de prévoir les cas de pannes dans une carte à puce ou dans la base de données.

Le problème se présente également si, au lieu d'échange d'unités, on prévoit par exemple d'effectuer des réservations: une réservation étant enregistrée dans une carte à puce, alors que la prise de la réservation est également enregistrée dans la base de donnée au nom du titulaire de la carte à puce. On peut par ailleurs imaginer d'autres situations où les échanges d'information doivent être cohérents.

Pour résoudre ce problème, dans l'invention on a eu l'idée de faire appel à un protocole particulier d'enregistrement. Dans l'invention, dans un premier temps on enregistre provisoirement l'information finale, ou le nouvel état des unités (celui qu'elles devraient avoir à l'issue de la transaction), en mémoire non volatile. On garde d'autre part en mémoire non volatile ces informations ou unités dans leur état initial, avant la transaction. Ensuite, on envoie à un organe qui gère la transaction un message indiquant que ce type de préparation a été mené à terme. L'organe de gestion de la transaction vérifie ensuite qu'il reçoit un message du même type de tous les partenaires à la transaction (en général il n'y en a que deux mais il pourrait y en avoir plusieurs) et transmet, si la transaction s'est passée correctement, aux différents partenaires un deuxième message leur signalant que le caractère provisoire d'enregistrement de la transaction peut être abandonné au profit d'un caractère définitif. Dans ces conditions la carte à puce porte dans sa mémoire non volatile une indication montrant que le caractère provisoire peut être abandonné. On montrera que ce type de protocole permet de résister à toutes les tentatives de fraudes et à toutes les pannes qui peuvent survenir au cours de la réalisation de la transaction.

L'invention a donc pour objet un procédé de conduite de transaction entre une carte à puce, notamment de type porte monnaie électronique, et un système d'information, notamment une base de données, mis en relation entre eux par l'intermédiaire d'un lecteur de carte à puce relié au système, caractérisé en ce qu'il comporte les étapes suivantes, une fois que la carte à puce est en relation avec le système:
- une action de mise à jour provisoire d'information est effectuée dans la puce de la carte,
- et une action de mise à jour provisoire d'information correspondante est effectuée dans le système,
- lors de ces actions de mise à jour, une information finale est provisoirement enregistrée alors qu'une information initiale correspondant à cette information finale est gardée en mémoire,
- la carte à puce et le système envoient chacun à un organe de gestion de la transaction un premier message indiquant que les mises à jour, correspondantes ont été effectuées provisoirement par la carte à puce et le système,
- l'organe de gestion de la transaction vérifie la cohérence de ces premiers messages et envoie des deuxièmes messages à la carte à puce et ou au système pour leur indiquer que la transaction projetée est équilibrée entre eux,
- la puce de la carte à puce n'est autorisée à fonctionner que lorsqu'elle a reçu et enregistré le deuxième message.

En variante, la carte à puce et la base de donnée enregistrent le caractère définitif de la transaction et envoient un troisième message à l'organe de gestion pour signaler la réception du deuxième message,
- la puce de la carte à puce n'est alors autorisée à utiliser les informations reçues que lorsqu'elle a émis correctement le troisième message.

L'invention sera mieux comprise à la lecture de la description qui suit et à l'examen des figures qui l'accompagnent, celles-ci ne sont données qu'à titre indicatif et nullement limitatif de l'invention. Les figures montrent:
- figure 1: une représentation schématique d'un système utilisable pour mettre en oeuvre l'invention;
- figures 2a à 2c: des organigrammes d'actions à entreprendre, selon l'invention, d'une part dans une carte à puce, d'autre part dans un organe de gestion de la transaction et troisièmement dans une base de données (qui peut par ailleurs être aussi une carte à puce);
- figure 3: la représentation schématique des types des deuxièmes messages à émettre par l'organe de gestion de la transaction en réponse aux premiers messages reçus;
- figures 4a à 4d: des exemples préférés d'informations et/ou de messages échangés entre les différents partenaires à la transaction.

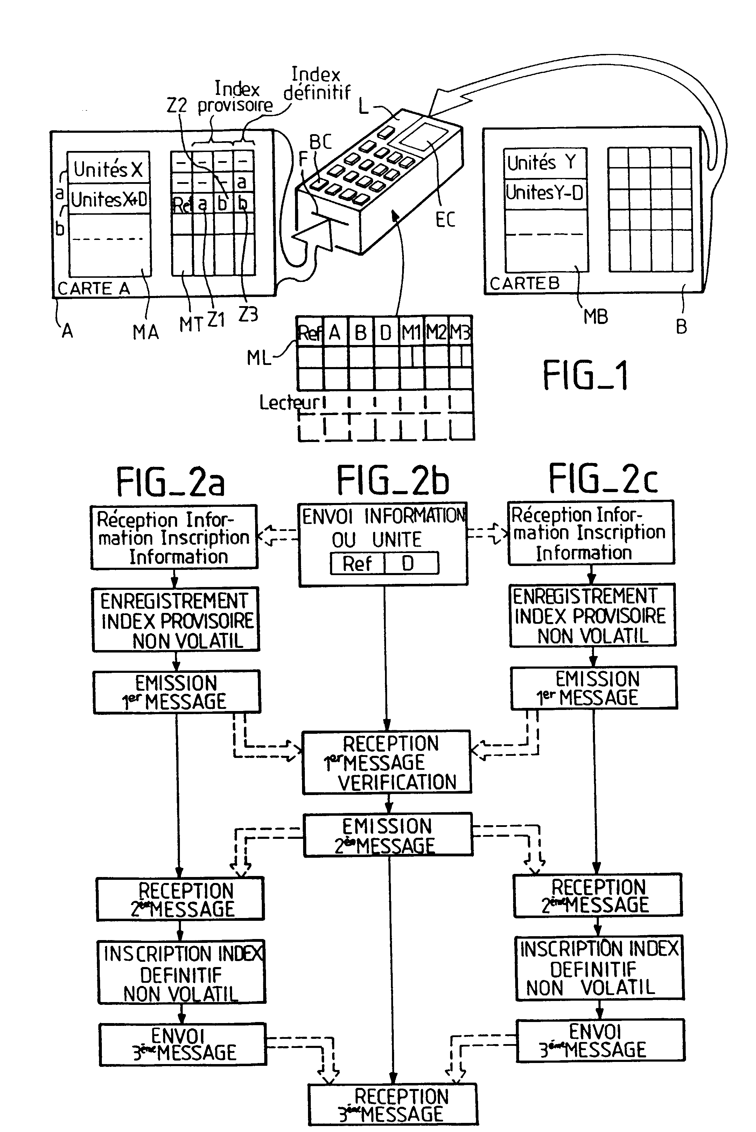

La figure 1 montre un système utilisable pour mettre en oeuvre le procédé de conduite de transaction selon l'invention. Ce système comporte une carte à puce: la carte à puce A. La carte à puce A est notamment du type porte-monnaie électronique et contient dans une mémoire MA, par exemple à une adresse a, un nombre X d'unité stockées. Les unités stockées à l'adresse a le sont sous la forme de données représentatives de ces unités, cependant ces unités pourraient être également enregistrées sous la forme de cellules mémoires oblitérables, de type fusible, lorsqu'elles sont consommées. Dans ce cas, la mise à jour, l'incrémentation du contenu d'unité, pourrait être réalisé en autorisant l'accès à de nouvelles cellules mémoires oblitérables ou éventuellement en enlevant l'oblitération de cellules mémoire déjà oblitérées. Les données stockées à l'adresse a peuvent aussi être des données de réservation d'un service ou d'un droit. Elles peuvent encore être des données d'information pure. Dans ce cas, la transaction pourrait avoir pour but de certifier que le titulaire de la carte A a reçu ces informations.

La carte à puce peut être mise en relation avec une base de donnée, représentée ici à titre d'exemple par une autre carte à puce B, du même type que la précédente. La liaison avec la base de données, ou plus généralement le système d'information, s'effectue par l'intermédiaire d'un lecteur de carte à puce L qui, dans l'exemple, comporte un ensemble de boutons de commande BC ainsi qu'un écran de contrôle EC pour visualiser en temps réel l'évolution de la transaction ou pour qu'un opérateur puisse satisfaire aux requêtes qui lui sont faites pour mener à bien les différents protocoles de reconnaissance et d'évolution de la transaction.

Ainsi dans un premier temps, la carte à puce A entre en relation avec le système, la base de données représentée par la carte B, par l'intermédiaire du lecteur L. Ce type d'entrée en relation est connu. Par exemple, un opérateur introduit la carte à puce A dans le lecteur L. Pour qu'elle soit reconnue, cet opérateur doit composer avec les boutons BC un mot de passe (que lui seul connaît) à l'invite d'un message apparaissant dans l'écran EC. Lorsque ce protocole de reconnaissance est terminé, l'opérateur ou un autre opérateur effectue un même type d'actions en introduisant la carte B. En variante, le lecteur est en relation directe avec la base de données (ou en relation différée par branchement le soir ou la nuit par exemple). Dans ce cas le lecteur L lui même contient la base de données, au moins sous une forme provisoire.

Dans le cas le plus complexe où la base de données est également une carte B, les lecteurs selon l'invention utilisables dans le commerce comporteront deux fentes d'introduction telles que F, sans volet anti-arrachement. Ils permettront naturellement de retirer les cartes A ou B à tous moments, même si la reconnaissance ou la transaction sont encore en cours. En pratique, le procédé de l'invention évitera tous les problèmes qui pourraient en résulter. En effet, il est illusoire de prévoir des lecteurs avec des mécanismes empêchant ce retrait: cela les rendrait plus compliqués, plus chers, et cela serait par ailleurs complètement inopérant vis-à-vis des vélléités de fraude émanant des fraudeurs.

D'une manière préférée, le lecteur L comporte une mémoire ML dans laquelle seront enregistrées les différentes transactions effectuées par l'intermédiaire de ce lecteur L.

Les figures 2a à 2b montrent les différentes opérations effectuées pour mettre en oeuvre le procédé de l'invention. Par exemple, figure 2b, une fois que les cartes A et B ont été reconnues, un opérateur prévoit, à l'aide des boutons de commande BC, la réalisation d'une transaction. Il décide par exemple de transférer une quantité D d'unités de la carte B à la carte A. En définitive on imagine que de cette façon on va augmenter le crédit d'unité de la carte A en débitant ce qui était contenu dans la carte B: on effectue ainsi un paiement. On peut par ailleurs dans le même ordre d'idée effectuer une réservation, la réservation devant être écrite dans la carte A, la carte B (ou la base de données équivalente) enregistrant le fait que la réservation a été faite au nom de A.

Cette transaction comporte donc essentiellement l'envoi de l'information D, sur laquelle porte la transaction, à la fois à la carte A et à la fois à la carte B. On verra par la suite que cette information est plus complète mais pour l'essentiel elle doit comporter une information D: D représentant par exemple un certain nombre d'unités.

Lorsque la carte A reçoit l'information D, figure 2a, elle l'enregistre en mémoire non volatile. Par exemple alors que la carte A possédait à une adresse a de sa mémoire MA, figure 1, un nombre X d'unités enregistrées, elle va maintenant enregistrer à une adresse b un nombre d'unités X+D. Ce faisant, la carte A selon la deuxième phase du procédé de l'invention va préparer puis envoyer au lecteur L, un premier message indiquant que les débits (ou crédits) correspondants ont été effectués provisoirement par la carte à puce A. Pour ce faire la carte à puce A va d'une part inscrire dans une mémoire de transaction MT (qui peut physiquement être la même que la mémoire MA qui contient les unités ou qui peut être une autre mémoire du circuit intégré, la puce, de la carte à puce) une indication relative au stockage provisoire des données en mémoire MA.

La mémoire MT a la particularité d'être non volatile. L'indication correspond à un premier message mentionnant essentiellement le caractère provisoire de l'enregistrement de la transaction. Par exemple dans la mémoire de transaction MT on enregistre, dans une ligne d'enregistrement correspondant à la transaction en cours: dans une première zone Z1, l'adresse a mentionnant l'adresse de départ des informations, et dans une deuxième zone Z2 l'adresse b renseignant sur l'adresse finale à l'issue de la transaction. Ceci étant effectué, la carte à puce A émet d'autre part en direction du lecteur L un message par lequel elle dit de préférence que d'une part on a enregistré les unités X+D à l'adresse b, et que d'autre part l'index provisoire comporte en zones Z1 Z2 l'information ab. Ceci en substance veut dire que la transaction s'est provisoirement bien effectuée.

La nature du premier message peut être très simple, même codée sur un seul bit pour dire que la partie provisoire du procédé s'est bien passée. Ce premier message peut de préférence être plus complexe, par exemple comporter les informations d'adresse a et b. Il peut même être chiffré ou signé.

Le lecteur L reçoit alors ce premier message en provenance de la carte A, figure 2b. Il vérifie également qu'il reçoit un message correspondant en provenance de la carte B. Celle-ci a bien entendu enregistré la transaction en sens inverse, son contenu d'unités, au préalable valant Y, a été porté provisoirement à une valeur Y-D. Lorsque l'organe de gestion de la transaction, de préférence contenu dans le lecteur L, constate que les informations transmises sont cohérentes il émet un deuxième message en direction de la carte A et de la carte B. Le but de ce deuxième message est de rendre définitive la transaction provisoire qui était préalablement enregistrée.

La carte A et la carte B reçoivent alors le deuxième message, figures 2a et 2c. Elles enregistrent ensuite un index définitif en mémoire non volatile MT mentionnant le caractère définitif de la transaction. Par exemple dans une troisième zone Z3 de la mémoire MT, la carte A enregistre l'adresse b en cas de succès, ou l'adresse a en cas d'échec. Ceci veut dire que l'information à utiliser est maintenant l'information à prélever à l'adresse b, ou a, mentionnée en Z3. On voit immédiatement que, si la transaction avait échoué, et ou si le contenu du deuxième message avait été un message d'échec, la carte A aurait dans la zone Z3 soit une information absente soit l'information a: ceci aurait signifié que l'adresse de la valeur définitive à l'issue de la transaction aurait été l'adresse a: celle qui était en cours avant le début de la transaction. On peut ainsi retenir qu'en cas d'absence d'adresse ou d'information en zone Z3, l'adresse ou l'information de la zone Z1 prime. Par exemple, figure 1, mémoire MT, au dessus de l'enregistrement relatif à la transaction en cours, on a montré également en zone Z3, pour une transaction précédente, que l'information valable était stockée à l'adresse a.

Le programme mis en oeuvre par la carte A pour rendre la transaction définitive est donc simple. En cas d'échec de la transaction le contenu de la zone Z1 est porté dans la zone Z3, en cas de succès de la transaction le contenu de la zone Z2 est porté dans la zone Z3. Bien entendu, si la carte est retirée avant que le deuxième message ne lui soit parvenu, il n'y aura rien d'enregistré dans la zone Z3 et par conséquent on pourra en déduire que la transaction aura échoué. Au besoin on peut confondre la zone Z1 et la zone Z3 si on veut gagner de la place en mémoire. Bien entendu une démarche similaire se produit dans la carte B ou dans la base de données qu'elle est censé représenter. On peut arriver à un même mécanisme d'autre façon. Par exemple les zones Z1-Z3 sont accolées à des enregistrements de la mémoire MA. L'enregistrement de cette mémoire qui est valide comporte au moins un bit supplémentaire montrant qu'il est actif. La carte B est de préférence réalisée avec une même structure.

De préférence, la carte A et la carte B comportent un microprogramme systématique qui les empêchent de fonctionner tant que la zone Z3 du dernier enregistrement en mémoire MT ou son équivalent n'est pas renseigné. De cette façon, une carte A ayant subi un problème est neutralisée. Ce microprogramme comporte par ailleurs une relance systématique en direction du lecteur L pour recevoir un message du deuxième type. Ce deuxième message est, hors cas normal d'utilisation, systématiquement un message d'échec de la transaction. Il ne peut par exemple être considéré comme un message de succès que si son déchiffrement le permet. Dans tous les autres cas il conduit à devoir rejouer la transaction.

Sur le plan pratique les opérations dans les cartes et le lecteur peuvent s'effectuer en temps partagé et apparaître, à une échelle des temps perceptibles par un opérateur, comme s'effectuant en même temps en temps réel.

A l'issue de la transaction, la carte A et la carte B envoient au lecteur L un troisième message signalant que la transaction a été parfaite en ce qui les concerne.

De préférence, le lecteur enregistre dans sa mémoire M, à chaque transaction qu'il effectue, un enregistrement comportant en substance une référence Ref de la transaction, l'identification A du premier partenaire, la carte A, l'identification B du deuxième partenaire, la carte B, le contenu D de la transaction (avec le sens de la transaction selon que la carte A a été débitée ou créditée), le contenu dans une zone M1 du premier message reçu à la fois de la carte A et de la carte B, le contenu dans une zone M2 du deuxième message envoyé à chacun des deux partenaires, ainsi que le contenu dans une zone M3 du troisième message reçu de ces deux partenaires à l'issue de la transaction.

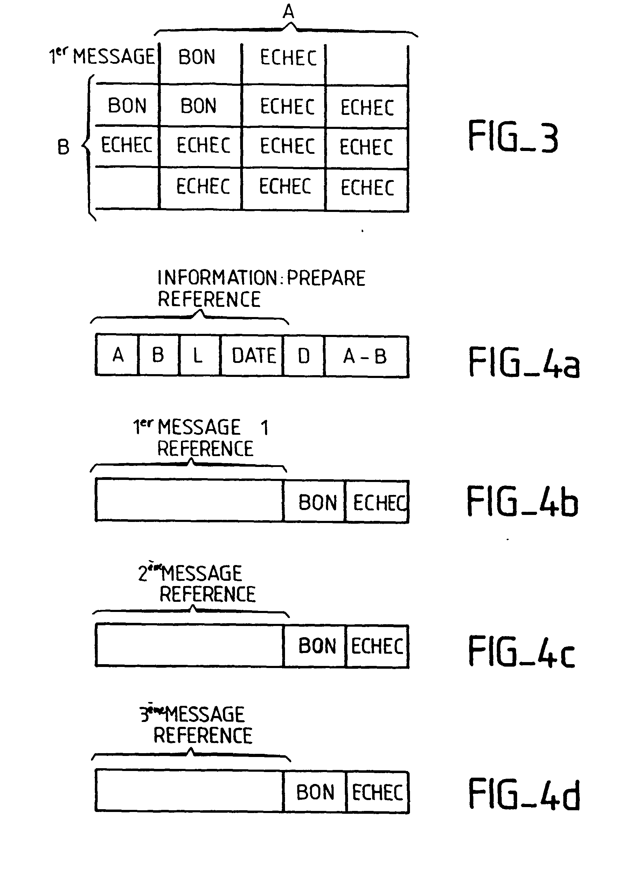

Dans un exemple, figure 3, le premier message reçu de la carte A peut être un message BON, un message ECHEC, ou encore pas de message (ou un message incompréhensible) si la carte a été débranchée avant que la transaction ne s'exécute ou encore si la carte A est en panne. Il en est de même en ce qui concerne la carte B. Le contenu de ces deux messages est stocké dans les zones correspondantes M1 de la mémoire M. Le lecteur L élabore ensuite un message BON uniquement si les deux premiers messages reçus sont à BON, ou un message ECHEC dans tous les autres cas. Le contenu du deuxième message BON ou ECHEC est alors envoyé à la carte A et à la carte B. Celles-ci, à la réception de ce message, continuent à effectuer le reste de la transaction et transmettent au lecteur L le résultat de leur action.

Les figures 4a à 4d montrent des exemples préféré de messages échangés entre le lecteur L et la ou les cartes à puces. L'information envoyée par le lecteur L, qui correspond à une demande de préparation de la transaction, comporte de préférence une référence de transaction. Cette référence comportera de préférence, en clair ou chiffré, l'indication du nom du premier partenaire A, du deuxième partenaire B, de l'identification du lecteur L avec lequel la transaction a été effectuée ainsi que la date à laquelle cette transaction a été effectuée ou d'autres informations. Cette information comporte également la valeur de l'information à transmettre: D. Elle comporte également le sens A-B (ou B-A) selon qu'il s'agisse de débiter ou de créditer la carte A.

Le premier message émis par la carte A reprendra, de préférence, tout ou partie de cette référence ainsi que le résultat de la préparation: BON ou ECHEC. Les deuxième et troisième messages seront constitués de la même manière.

De préférence les données relatives à la référence ainsi qu'au résultat de la transaction seront cryptées par des algorithmes de cryptographie contenus dans les cartes A et/ou B et par ailleurs connus par le lecteur L. De tels procédés de cryptographie sont notamment utilisés dans l'état de la technique pour effectuer la reconnaissance préalable des cartes par le lecteur.

De préférence les contenus de cet envoi et de ces messages seront signés. Par exemple, à chaque émission ou réception, un compteur d'émission/réception, ou d'émission ou de réception, augmente son contenu d'une unité et le cryptogramme envoyé relatif à la valeur du message tient compte de l'état de ce compteur pour être paramètré. De cette façon, si un message devait être réitéré, il ne serait jamais réitéré, d'une fois sur l'autre, de la même façon.

Lorsqu' une transaction a échoué, il est possible de se retrouver dans une situation telle que dans la zone Z3 de la mémoire MT de la carte il n'y ait pas d'indication. Dans ce cas, le microprogramme de la carte A envoie une requête à destination du lecteur L visant à recevoir, une deuxième fois, le deuxième message de manière à ce que la zone M3 puisse être renseignée définitivement. On se rend compte avec ce système qu'il est possible, chaque fois que la zone Z3 n'est pas renseignée, de relancer aussi souvent que nécessaire une requête à destination du lecteur. La requête comportera l'identification de la transaction par la référence Ref. Lors de la réception de cette requête, le lecteur re-émettra le deuxième message qui pourra être reçu et interprété en conséquence. Il est évident que, ne connaissant pas les paramètres de la transaction, un lecteur quelconque L' ne pourra qu'émettre un message du deuxième type faux, qui sera alors interprété comme un message d'échec.

Si la transaction à mettre en oeuvre est une transaction de type débit-crédit, on peut prévoir de valider d'abord le débit (de la carte B) avant d'envoyer un deuxième message BON à la carte A à créditer. De cette façon on évite de créer de la monnaie. Dans ce cas, la base de données, carte B, émettra son troisième message, le lecteur L le recevra puis, seulement après, enverra le deuxième message à la carte A.

On observe que le procédé de l'invention permet ainsi de réaliser les opérations en temps différé qu'il sera nécessaire de mettre en place avec la technique des cartes à puce à porte-monnaie électronique. En effet, la base de données, qui peut être contenue dans le lecteur L et qui est en fait constitué par les enregistrements de la mémoire ML, peut servir à mettre à jour une base de données contenue dans les fichiers centraux d'une banque. Par exemple, on connecte le lecteur L tous les soirs au fichier central de la banque en question. Le fait par ailleurs de transmettre la référence relative à la transaction permet d'identifier, en cas de fraude subtile quel est l'intervenant A, B ou L qui se livre systématiquement à des opérations interdites.

Pour parfaire encore le procédé de l'invention, il peut être prévu de ne rendre la transaction définitive qu'après une double vérification, de telle façon qu'un quatrième message doive être envoyé par le lecteur L à destination des cartes A et B. Seule la réception par ces cartes A et B de cette deuxième confirmation de l'échange vaudrait transaction parfaite. On rajouterait alors une zone Z4 en mémoire MJ pour gérer cette situation.

La puce de la carte A comporte d'une manière préférée un microprocesseur et une mémoire en relation avec ce microprocesseur. Cette mémoire peut comporter une mémoire à accès aléatoire statique ou dynamique servant de mémoire de travail et une mémoire de type EPROM pour servir de mémoire non volatile MA - MT, et stocker des programmes exécutables, des données de base (code secret, identification, signature), et des données résultant de la transaction. La mémoire non volatile peut aussi être une mémoire à accès aléatoire sauvegardée par une pile.

Pour la gestion de la transaction, on retiendra de préférence un microprocesseur contenu dans le lecteur. Il est cependant envisageable de faire supporter le contrôle de la transaction par le microprocesseur de l'une des cartes à puce, ou par un microprocesseur qui serait dédié à la gestion de la base de données.

## Revendications

1. Procédé de conduite de transaction entre une carte (A) à puce, notamment de type porte monnaie électronique, et un système d'information, notamment une base de données, mis en relation entre eux par l'intermédiaire d'un lecteur (L) de carte à puce relié au système, caractérisé en ce qu'il comporte les étapes suivantes, une fois que la carte à puce est en relation avec le système:
- une action de mise à jour provisoire d'information est effectuée dans la puce de la carte,
- et une action de mise à jour provisoire d'information correspondante est effectuée dans le système,
- lors de ces actions de mise à jour, une information finale est provisoirement enregistrée alors qu'une information initiale correspondant à cette information finale est gardée en mémoire,
- la carte à puce et le système envoient chacun à un organe de gestion de la transaction un premier message indiquant que les mises à jour correspondantes ont été effectuées provisoirement par la carte à puce et le système,
- l'organe de gestion de la transaction vérifie la cohérence d'au moins un de ces premiers messages et envoie un deuxième message à la carte à puce et au système pour leur indiquer que la transaction projetée est équilibrée entre eux,
- la puce de la carte à puce n'est autorisée à fonctionner que lorsqu'elle a reçu et enregistré (Z3) le deuxième message.

2. Procédé selon la revendication 1, caractérisé en ce que
- la carte à puce et le système enregistrent le caractère définitif de la transaction et envoient un troisième message à l'organe de gestion pour signaler la réception du deuxième message,
- la puce de la carte à puce n'est alors autorisée à utiliser les informations reçues que lorsqu'elle a émis correctement le troisième message.

3. Procédé selon la revendication 2, caractérisé en ce que, à la réception du troisième message, l'organe de gestion de la transaction émet un quatrième message à destination de la carte et ou du système, pour confirmer le caractère définitif de la transaction.

4. Procédé selon l'une des revendications 1 à 3, caractérisé en ce que la carte à puce et ou le système d'information enregistrent en mémoire non volatile
- le résultat provisoire (X + D) de l'action de mise à jour,
- et une indication (a,b) relative au premier message,
- et une indication (b) relative au deuxième message.

5. Procédé selon l'une des revendications 1 à 4, caractérisé en ce que des actions de mise à jour sont entreprises à l'initiative d'un organe de gestion du lecteur, ou un organe de gestion du système, ou un organe de gestion de la carte à puce, l'organe de gestion qui agit envoyant à la carte à puce, au lecteur et au système des informations relatives à ces actions.

6. Procédé selon l'une des revendications 1 à 5, caractérisé en ce que le système d'information est contenu dans une autre carte à puce.

7. Procédé selon l'une des revendications 1 à 6, caractérisé en ce que l'information et ou certains des messages comportent une référence (Ref) de la transaction.

8. Procédé selon l'une des revendications 1 à 7, caractérisé en ce que les échanges entre la carte, le lecteur, et ou le système sont cryptés et ou signés.

9. Procédé selon l'une des revendications 2 à 8, caractérisé en ce que la carte, ou le système envoie son troisième message à l'organe de gestion, avant qu'un deuxième message ne soit envoyé au système, ou dans la carte, respectivement.

10. Procédé selon l'une des revendications 1 à 9 caractérisé en ce que on fait faire des requêtes en réception du deuxième message par la carte à puce et ou le système tant que ce deuxième message n'a pas été valablement reçu.

## Patentansprüche

1. Verfahren zum Durchführen einer Übertragung zwischen einer Chipkarte (A), insbesondere vom Typ einer Geldkarte bzw. einer elektronischen Geldbörse, und einem Datensystem, insbesondere einer Datenbank, die mittels eines an das System angebundenen Chipkartenlesegeräts (L) in Verbindung zueinander gesetzt werden, dadurch gekennzeichnet, daß, wenn die Chipkarte in Verbindung mit dem System steht:
- in der Chipkarte ein vorläufiger Datenaktualisierungsvorgang durchgeführt wird,
- und ein entsprechender vorläufiger Datenaktualisierungsvorgang im System durchgeführt wird,
- während dieser Aktualisierungsvorgänge eine Zielinformation vorläufig aufgezeichnet und währenddessen eine dieser Zielinformation entsprechende Ursprungsinformation im Speicher gespeichert wird,
- sowohl die Chipkarte als auch das System an ein Durchführungsorgan der Übertragung eine erste Nachricht senden, die anzeigt, daß die entsprechenden Aktualisierungen von der Chipkarte und dem System vorläufig durchgeführt worden sind,
- das Durchführungsorgan der Übertragung die Kohärenz von wenigstens einer dieser ersten Nachrichten überprüft und eine zweite Nachricht an die Chipkarte und an das System sendet, um ihnen anzuzeigen, daß die geplante Übertragung zwischen ihnen ausgeglichen ist,
- die Chipkarte nur zur Funktion ermächtigt ist, wenn sie die zweite Nachricht erhalten und aufgezeichnet (Z3) hat.

2. Verfahren nach Anspruch 1, dadurch gekennzeichnet, daß
- die Chipkarte und das System den endgültigen Charakter der Übertragung aufzeichnen und eine dritte Nachricht an das Durchführungsorgan senden, um den Empfang der zweiten Nachricht anzuzeigen,
- der Chip der Chipkarte erst dann ermächtigt ist, die empfangenen Daten zu verwenden, wenn sie korrekt die dritte Nachricht ausgesendet hat.

3. Verfahren nach Anspruch 2, dadurch gekennzeichnet, daß das Durchführungsorgan der Übertragung beim Empfang der dritten Nachricht eine an die Chipkarte und/oder das System gerichtete vierte Nachricht aussendet, um den endgültigen Charakter der Übertragung zu bestätigen.

4. Verfahren nach einem der Ansprüche 1 bis 3, dadurch gekennzeichnet, daß die Chipkarte und/oder das Datensystem in einem nichtflüchtigen Speicher
- das vorläufige Ergebnis (X+D) des Aktualisierungsvorganges,
- und eine Angabe (a, b) in Bezug auf die erste Nachricht,
- und eine Angabe (b) in Bezug auf die zweite Nachricht speichert.

5. Verfahren nach einem der Ansprüche 1 bis 4, dadurch gekennzeichnet, daß die Aktualisierungsvorgänge gestartet werden auf Anregung von einem Durchführungsorgan des Lesegerätes, des Systems oder der Chipkarte, wobei das Durchführungsorgan, das handelt, an die Chipkarte, das Lesegerät und das System Daten bezüglich dieser Vorgänge sendet.

6. Verfahren nach einem der Ansprüche 1 bis 5, dadurch gekennzeichnet, daß das Datensystem in einer anderen Chipkarte enthalten ist.

7. Verfahren nach einem der Ansprüche 1 bis 6, dadurch gekennzeichnet, daß die Daten und/oder bestimmte Nachrichten eine Referenz (Ref) der Übertragung enthalten.

8. Verfahren nach einem der Ansprüche 1 bis 7, dadurch gekennzeichnet, daß der Austausch zwischen der Karte, dem Lesegerät, und/oder dem System verschlüsselt und/oder signiert bzw. gezeichnet ist.

9. Verfahren nach einem der Ansprüche 2 bis 8, dadurch gekennzeichnet, daß die Karte oder das System ihre bzw. seine dritte Nachricht an das Durchführungsorgan sendet, bevor eine zweite Nachricht jeweils an das System bzw. in die Karte gesendet worden ist.

10. Verfahren nach einem der Ansprüche 1 bis 9, dadurch gekennzeichnet, daß Anfrage nach Empfang der zweiten Nachricht durch die Chipkarte und/oder das System veranlaßt werden, solange diese zweite Nachricht nicht gültig empfangen worden ist.

## Claims

1. A method of conducting a transaction between a chip card (A), particularly of the electronic purse type, and a data system, in particular a data base, placed in contact with one another by means of a chip-card reader (L) linked to the system, characterised in that, once the chip card is connected to the system, the following steps are carried out:
- data contained on the chip card is provisionally updated,
- corresponding data in the system is provisionally updated,
- during these updating procedures, a final datum is provisionally recorded whilst an initial datum corresponding to this final datum is stored in memory,
- the chip card and the system each send to a transaction-management element a first message indicating that the corresponding updates have been provisionally effected by the chip card and the system,
- the transaction-management element verifies the consistency of at least one of these first messages and sends a second message to the chip card and to the system, indicating to them that the proposed transaction between the two has balanced,
- the chip of the chip-card is not authorised to function until it has received and recorded (Z3) the second message.

2. A method as claimed in claim 1, characterised in that
- the chip card and the system record the definitive nature of the transaction and send a third message to the management element to acknowledge receipt of the second message,
- the chip of the chip card is not authorised to use the information received until it has correctly transmitted the third message.

3. A method as claimed in claim 2, characterised in that on receipt of the third message, the transaction-management element transmits a fourth message addressed to the card or the system to confirm the final nature of the transaction.

4. A method as claimed in one of claims 1 to 3, characterised in that the chip card and the data system record in non-volatile memory
- the provisional result (X + D) of the updating procedure,
- and an indicator (a, b) relating to the first message,
- and an indicator (b) relating to the second message.

5. A method as claimed in one of claims 1 to 4, characterised in that the updating procedues are initiated by a management element of the reader or a management element of the system or a management element of the chip card, whereby the relevant management element sends to the chip card, the reader and the system the data relating to these procedures.

6. A method as claimed in one of claims 1 to 5, characterised in that the data system is contained in another chip card.

7. A method as claimed in one of claims 1 to 6, characterised in that the data and or some of the messages contain a transaction reference (Ref).

8. A method as claimed in one of claims 1 to 7, characterised in that the exchanges between the card, the reader and or the system are encrypted and or signed.

9. A method as claimed in one of claims 2 to 8, characterised in that the card or the system sends its third message to the management element before a second message is sent to the system or onto the card respectively.

10. A method as claimed in one of claims 1 to 9, characterised in that on receipt of the second message, the chip card and or the system are made to initiate queries if the second message is not received correctly.
